# EUROPÄISCHE PATENTANMELDUNG

(11) **EP 4 682 648 A1**
(43) Veröffentlichungstag der Anmeldung: **21.01.2026**
(21) Anmeldenummer: 24189460.9
(22) Anmeldetag: 18.07.2024
(51) Int. Cl.: G05B 19/042, G05B 19/05

(54) **VERFAHREN ZUM BETREIBEN EINER ZYKLUSORIENTIERTEN STEUERUNGS-SOFTWARE**

(71) Anmelder: Siemens Aktiengesellschaft, 80333 München (DE)
(72) Erfinder: Hog, Ronny, 92245 Kümmersbruck (DE); Schweiger, Julia, 92242 Hirschau (DE); Schötz, Sebastian, 92256 Hahnbach (DE); Walter, Markus, 96050 Bamberg (DE)
(74) Vertreter: Siemens Patent Attorneys

(57) **Zusammenfassung**

Um bei einem Verfahren zum Betreiben einer zyklusorientierten Steuerungs-Software (Soft-PLC) zur fehlersicheren Steuerung von Automatisierungs-Abläufen eines Prozesses, wobei die Steuerungs-Software (Soft-PLC) innerhalb eines Rechnersystems (1) zum Ablauf gebracht wird, einen möglichen Software-/Hardwarefehler im Rechnersystems (1), durch welchen eine fälschlicherweise Abfrage der Sicherheitszeit (FT) von einer internen Schnittstellenkarte (iNIC) ausgeführt wird, aufzudecken wird, zyklisch geprüft, ob ein Abfrageweg für die unabhängige Sicherheitszeit (FT) mit sicheren Verbindungswegen (S7V) übereinstimmt, falls das nicht der Fall ist, wird mittels der Steuerungs-Software (Soft-PLC) ein sicherer Zustand eingenommen.

## Beschreibung

Heute gängige Steuerungen basieren auf einer Hardwareplattform, einen speziellen elektronischen Unterbau, nämlich eine Speicherprogrammierbare Steuerung (SPS). Wenn neuerdings von virtuellen Steuerungen oder Softwaresteuerungen die Rede ist, so ist dafür ebenfalls eine Hardware zur Ausführung erforderlich, aber die Hardware kann jetzt komplett abstrahiert sein. Dies bedeutet, dass die ausgeführte Soft-SPS nicht mehr wissen muss, auf welchem Gerät sie läuft.

Diese Geräte können nach wie vor dedizierte Steuerungsgeräte sein, wie multifunktionale Steuerungsplattformen oder Industrie-PCs, oder aber Edge-Computing-Plattformen, diese sind immer häufiger in Steuerungsnetzwerken von Maschinen- und Anlagenbetreibern zu finden, oder es werden sogar Cloud-Computing-Plattformen genutzt. Entscheidend ist die Abstraktion der Hardware durch Container oder Hypervisor. Darauf wird die Soft-SPS mit Standardmitteln »deployed« beziehungsweise per Tool orchestriert - eine Installation wie bei der softwarebasierten Steuerung entfällt.

Die Erfindung liegt auf dem Fachgebiet von sicherheitsgerichteten Steuerungen, insbesondere als Software. Speicherprogrammierbare Steuerungen müssen gemäß den Anforderungen der Norm EN 61508 derart ausgestaltet sein, dass sie eine funktionale Sicherheit erfüllen. Bei sicherheitsbezogenen Systemen, wie speicherprogrammierbare Steuerungen für kritische Prozesse, die elektrische, elektronische oder programmierbare elektronische Komponenten enthalten und deren Ausfall ein maßgebliches Risiko für Mensch oder Umwelt bedeutet, müssen diese für eine besondere Gewährleistung der Sicherheit ausgestaltet sein. Als Beispiele für Anwendungen, welche eine erhöhte Sicherheit erfordern, sind folgende zu nennen: Kernkraftwerke, Leittechnik für Systeme mit sicherheitstechnischer Bedeutung, Bahnanwendungen, Telekommunikationstechnik, Signaltechnik und Datenverarbeitungssysteme, chemische Prozesse, aber auch beispielsweise kleine Anlagen wie eine Stanze zum Ausstanzen von Blechteilen.

Die Erfindung betrifft ein Verfahren zum Betreiben einer zyklusorientierten Steuerungs-Software zur fehlersicheren Steuerung von Automatisierungs-Abläufen eines Prozesses, wobei die Steuerungs-Software innerhalb eines Rechnersystems zum Ablauf gebracht wird, wobei in der Steuerungs-Software ein Sicherheitsprogramm zum Ablauf gebracht wird, wobei zur Absicherung einer Systemzeit des Rechnersystems eine weitere von der Systemzeit unabhängige Sicherheitszeit abgefragt wird.

In der EP 2 284 771 B1 und in der EP 2 241 953 B1 wird beschrieben, dass in jedem Zyklus einer Sicherheitssteuerung eine sichere Zeit aus zwei Zeitgebern (Standard-Timer und Failsafe-Timer oder F-Timer) gebildet wird. Dies wird erreicht durch die Bildung der Zeitdifferenz zwischen zwei Zyklen (S-Diff und F-Diff) und anschließenden Vergleich der Zeitdifferenzen mit einer vorgegebenen Toleranz.

Zur Realisierung sicherer Zeitfunktionen (Anwenderzeiten z.B. Einschaltverzögerung oder Überwachungszeit und z.B. F-Zykluszeitüberwachung) wird eine sichere Zeit benötigt.

Die Realisierung dieser sicheren Zeit erfolgt über zwei unabhängige Timer. Diese müssen vorzugsweise diversitär ausgeführt werden, d.h. jeder Timer nutzt einen eigenen unabhängigen Quarz.

Bisher wurde die Ausführung der sicheren Zeit immer auf einer dem Anwender bekannten Hardwarebasis mit den entsprechenden Anforderungen an die diversitären Timer durchgeführt. Bei einer herkömmlichen Hardware-CPU sind auf der Platine zwei unabhängige Quarze vorhanden ein System-Quarz und extra Realtime RTC-Quarz. Bei einer Software-CPU bzw. einer hardwareunabhängigen Steuerungs-Software läuft die SPS auf einem unbekannten System ab. Eine hardwareunabhängige SPS mit sicherer Zeitfunktion insbesondere im Edge-Umfeld gibt es bisher noch nicht.

Es ist daher eine Aufgabe der Erfindung ein Verfahren und eine Rechnereinheit bereitzustellen, welche es ermöglicht, eine Soft SPS bzw. eine zyklusorientierte Steuerungs-Software zur fehlersicheren Steuerung von Automatisierungs-Abläufen eines Prozesses auf einem unbekannten Rechensystem zu betreiben.

Die Aufgabe wird dadurch gelöst, dass durch die Steuerungs-Software eine zu dem Sicherheitsprogramm gehörige eindeutige Konfigurationsdatei bezüglich einer Verbindungkonfigurations-Datei für sichere Verbindungswege zur Kommunikation des Sicherheitsprogramm bzw. der Steuerungs-Software mit anderen Automatisierungsgeräten abgefragt wird, wobei in der Verbindungkonfigurations-Datei für sichere Verbindungswege festgelegt ist, das die Verbindungswege über eine externe Schnittstellenkarte geführt werden, und wobei die unabhängige Sicherheitszeit ebenfalls über die abgefragten sicheren Verbindungswege von der externe Schnittstellenkarte abgefragt wird, dabei wird die die unabhängige Sicherheitszeit von einem Uhrzeitgenerator der externen Schnittstellenkarte angefragt, wobei ein möglicher Software-/Hardwarefehler im Rechnersystems, durch welchen eine fälschlicherweise Abfrage der Sicherheitszeit von einer internen Schnittstellenkarte ausgeführt wird, dadurch aufgedeckt wird, das zyklisch geprüft wird, ob ein Abfrageweg für die unabhängige Sicherheitszeit mit den sicheren Verbindungswegen übereinstimmt, falls das nicht der Fall ist, wird mittels der Steuerungs-Software ein sicherer Zustand eingenommen.

Da beispielsweise eine Edge-Applikation auf einer Edge-Computing-Plattform über PROFINET mit einer anderen Automatisierungssteuerung oder einer Peripherie kommunizieren muss, ist immer sichergestellt, dass eine externe Netzwerkkarte verwendet wird. Diese kann genutzt werden, um dem Anwender eine sichere zweite Zeitbasis zur Verfügung zu stellen. In der Anwenderverantwortung liegt es, die physikalische Schnittstelle der virtuellen SPS so zu konfigurieren, dass diese an einer externen Netzwerkkarte liegt. Welche bei PROFINET einer Ethernet Schnittstellen einer externen Netzwerkkarte entspricht, da dies bei Industrial Edge Devices genau definiert und nachlesbar ist und bei virtuellen Edge Devices eine Netzwerkkarte am Hardwarerechner gesteckt werden muss.

Um die Unabhängigkeit der zweiten Zeitquelle zu garantieren, muss für den Zugriff auf einen Hardware Timer eine IEEE1588 fähige Netzwerkkarte verwendet werden, die für die IEEE1588 Funktionalität auf den eigenen auf der Netzwerkkarte verbauten Quarz zugreift und nicht auf dem Motherboard verbaut, d.h. nicht integriert ist. Damit die Schnittstelle für die F-Kommunikation und Zugriff auf zweite Zeitbasis zusammenfallen können, muss vom Anwender die Schnittstelle für die F-Kommunikation auch auf eine Netzwerkkarte mit diesen Eigenschaften konfiguriert werden. Erfindungsgemäß wird die nun fortlaufend überwacht, sollte ein Zugriff der Sicherheitszeit auf eine falsche Netzwerkkarte durch einen Software-Fehler auftreten, wird dies erkannt.

Sollte ein Anwender trotz korrekter Konfiguration das PROFINET-Kabel fälschlicherweise auf eine z.B. interne Netzwerkkarte stecken, so ist keine F-Kommunikation möglich. Somit ist das System auch in diesem Fall in einem sicheren Zustand.

Im Sinne der Erfindung bedeutet;
- externe Schnittstellenkarte bzw. externe Netzwerkkarte nicht integriert /nicht auf dem Motherboard verbaut und
- interne Schnittstellenkarte bzw. interne Netzwerkkarte
Intern integriert / auf dem Motherboard verbaut.

Anders ausgedrückt kann die Firmware der virtuellen SPS oder die Steuerungs-Software sich ihre zusätzliche Sicherheitszeit von einer physikalisch verbauten und mit einem Engineering Tool konfigurierten PROFINET Schnittstelle der virtuellen SPS abholen. In der Firmware der virtuellen SPS oder in der Steuerungs-Software kann die Konfigurationsdatei bezüglich der Verbindungkonfigurations-Datei für sichere Verbindungswege zur Kommunikation des Sicherheitsprogramm abgefragt werden und es kann die zuvor in dem Engineering Tool konfigurierte physikalische PROFINET Schnittstelle mit der Schnittstelle, wie sie für die sicheren Verbindungswege zur Kommunikation des Sicherheitsprogramm bzw. der Steuerungs-Software mit anderen Automatisierungsgeräten genutzt wird vergleichen.

Sind diese identisch, so ist sichergestellt, dass sowohl die Kommunikation als auch die Ableitung der zweiten sicheren Zeitbasis auf einer externen Netzwerkkarte mit unabhängigem Quarz basiert. Falls durch einen Software-/Hardwarefehler die Kommunikation fälschlicherweise mit einer z.B. interne Netzwerkkarte durchgeführt wird, so wird dies erkannt und das System geht in diesem Fall in einem sicheren Zustand.

Bei einer hardwareunabhängige SPS z.B. im Edge Umfeld kann auf einen unabhängigen Quarz auf einer Netzwerkkarte zugegriffen werden. Jedoch muss aufgrund der Virtualisierung von Geräten innerhalb des Edge Umfelds, insbesondere der Timer, sichergestellt werden, dass der Zugriff auf den Timer einer externen Netzwerkkarte mit eigenem Quarz erfolgt und nicht auf einen womöglich virtualisierten Timer mit nicht-unabhängiger Zeitquelle.

Mit dem Engineering Tool werden Sicherheitsrelevante Projektdaten als eine PC System Configuration-Datei auf dem Zielsystem abgespeichert. Diese PC System Configuration-Datei entspricht der Konfigurationsdatei. Die Konfigurationsdatei enthält auch eine Hardware-Konfiguration und diese ist ein wesentlicher Bestandteil des abzunehmenden Projekts. Verknüpft man den Zugriff auf die zweite Zeit mit der F-Kommunikation so kann durch diese Hardware-Konfiguration sichergestellt werden, dass immer auf die konfigurierte Schnittstelle zugegriffen wird. Würde durch einen SW-Fehler auf eine andere, womöglich interne Schnittstelle zugegriffen werden, würde das System aufgrund der Hardware-Konfiguration für die F-Kommunikation in einen sicheren Zustand gehen.

Das Rechnersystem kann als eine multifunktionale Steuerungsplattformen oder als ein Industrie-PCs oder als eine Edge-Computing-Plattform oder als eine Cloud-Computing-Plattform betrieben werden.

Die vorliegende Erfindung bietet eine Lösung für die Sicherstellung einer sicheren Zeitfunktion in einer virtualisierten Edge-Umgebung, indem sie die vom Anwender konfigurierte externe Netzwerkkarte für den Zugriff auf die unabhängige zweite Zeitquelle als auch für die Kommunikation benutzt, beispielsweise eine PROFINET-Schnittstelle. Der technische Fortschritt liegt in der Möglichkeit, eine hardwareunabhängige speicherprogrammierbare Steuerung, also einen Softwarecontroller, nämlich die zyklusorientierte Steuerungs-Software zur fehlersicheren Steuerung von Automatisierungs-Abläufen mit einer sichereren Zeitfunktion im Edge-Umfeld zu betreiben. Hierbei wird der Quarz der externen Netzwerkkarte als zweite unabhängige Zeitbasis genutzt. Dies geschieht durch eine spezifische Konfiguration der physikalischen Schnittstelle der virtuellen SPS, welche sicherstellt, dass die Zeitbasis von einer externen Netzwerkkarte mit eigenem Quarz abgeleitet wird. Im Falle einer fehlerhaften Konfiguration aufgrund eines Softwarefehlers (kein Anwenderfehler), bei der die interne Netzwerkkarte statt der externen verwendet wird, ist eine fehlersichere Kommunikation nicht möglich und das System bleibt in einem sicheren Zustand. Diese Methode unterscheidet sich von herkömmlichen Lösungen, die auf dedizierten Hardware- oder Software-CPUs mit separaten Quarzen basieren. Durch die Nutzung der Netzwerkkarte wird die Möglichkeit eröffnet, fehlersichere SPS-Systeme ohne dedizierte Hardware zu implementieren, was zu Kosteneinsparungen und einer höheren Flexibilität bei der Systemgestaltung führt. Die Vorteile dieser Lösung beinhalten nicht nur eine effizientere Nutzung von Ressourcen, sondern auch eine größere Anpassungsfähigkeit an verschiedene Hardwareumgebungen, ohne die Sicherheit der Zeitfunktion zu beeinträchtigen.

Die Erfindung betrifft auch ein Rechnersystem umfassend eine Laufzeit-Umgebung ausgestaltet eine zyklusorientierte Steuerungs-Software zur Steuerung eines Prozesses ablaufen zu lassen, einen Prozessor mit einer Systemzeit, eine Schnittstellenkarte mit einer externen Zeit-Quelle in Form eines Uhrzeitgenerator zum Bereitstellen einer Sicherheitszeit, einem Speicherbereich, ausgestaltet zum Durchführen des Verfahrens einem der Ansprüche 1 bis 3.

Vorzugsweise ist das Rechnersystem ausgestaltet als eine multifunktionale Steuerungsplattformen oder als ein Industrie-PCs oder als eine Edge-Computing-Plattform oder als eine Cloud-Computing-Plattform.

Die Steuerungs-Software ist eine Sicherheitssteuerung mit einem Sicherheitsprogramm und einem Standard-Anwenderprogramm aufweist.

Da auch die Steuerungs-Software als eine Edge-Applikation auf einer beliebigen Hardware laufen muss (PC, IPC, Server, usw.) ist jetzt immer sichergestellt, dass mindestens ein System-Quarz genutzt werden kann (z.B. Time Stamp Counter des Prozessors). Da die Edge-Applikation in der Regel über PROFINET mit einer anderen CPU oder Peripherie kommunizieren muss, ist immer sichergestellt, dass eine Netzwerkkarte verwendet wird. Diese kann genutzt werden, um dem Anwender eine sichere zweite Zeitbasis zur Verfügung zu stellen. Es liegt allerdings in der Anwenderverantwortung, die physikalische Schnittstelle der virtuellen SPS so zu konfigurieren, dass diese an einer externen Netzwerkkarte liegt und diese ist bei einem Industrial Edge Devices genau definiert. Eine interne Netzwerkkarte darf nicht für diese Absicherung über die Kommunikation mit der Peripherie verwendet werden, da eine interne Netzwerkkarte möglicherweise statt auf ihren eigenen Quarz auf den System-Quarz zugreift und somit die Diversität der Timer-Quellen nicht erfüllt wird. Die Firmware der virtuellen SPS kann somit ihr ausgewähltes Timer PCI Device, auf dem der zweite unabhängige Quarz verbaut ist, mit der physikalisch konfigurierten PROFINET Schnittstelle der virtuellen SPS vergleichen. Sind diese identisch, so ist sichergestellt, dass sowohl die Kommunikation als auch die Ableitung der zweiten sicheren Zeitbasis auf einer externen Netzwerkkarte mit unabhängigem Quarz basiert. Falls durch einen Software-/Hardwarefehler die PROFINET Schnittstelle fälschlicherweise auf eine z.B. interne Netzwerkkarte konfiguriert ist, so ist keine F-Kommunikation möglich, weil der Anwender gemäß der Konfiguationsvorgabe in Form einer Safety Warnung das Kabel auf die richtige externe Schnittstellenkarte gesteckt hat. Somit ist das System auch in diesem Fall in einem sicheren Zustand.

Die Zeichnung zeigt ein Ausführungsbeispiel der Erfindung, dabei zeigt die
FIG 1 ein Rechnersystem zum Betreiben einer zyklusorientierten Steuerungs-Software und
FIG 2 das Rechnersystem mit einer prinzipiellen Darstellung von einer falschen Zuordnung einer internen Netzwerkkarte und einer richtigen Zuordnung einer externen Netzwerkkarte.

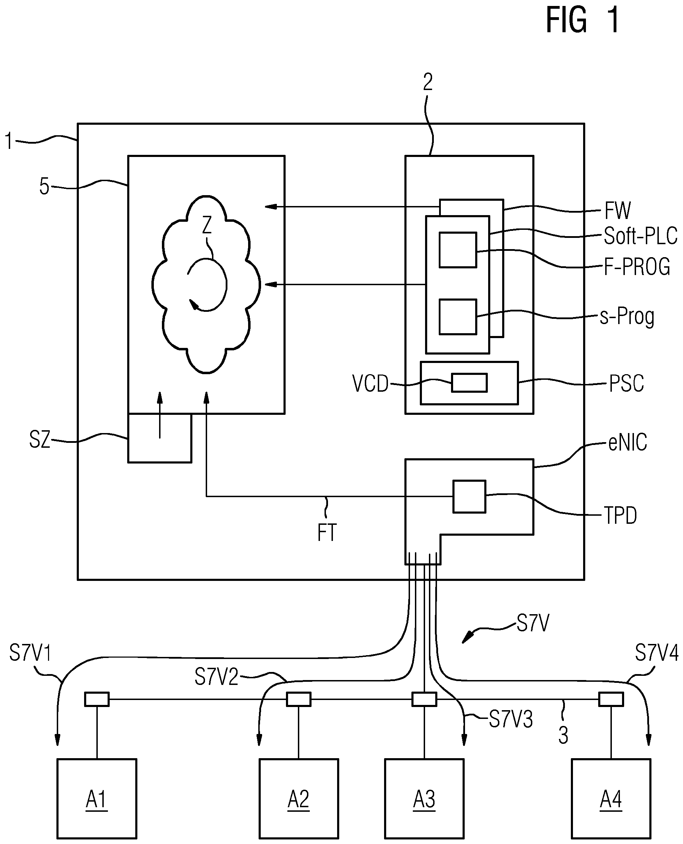

Gemäß FIG 1 ist ein Rechnersystem 1 umfassend einen Prozessor 5 mit einer Systemzeit SZ dargestellt. Das Rechnersystem 1 kann als eine beliebige IT-Infrastruktur, wie z.B. ein Industrie-PC, eine Edge-Computerplattform oder als eine Cloud Computing Plattform, ausgestaltet sein. Das Rechnersystem 1 weist einen Speicherbereich 2, in welchem eine Ablauf-Umgebung FW geladen ist, und eine Steuerungs-Software Soft-PLC auf, welche ein Sicherheitsprogramm F-Prog und ein Standardprogramm S-Prog aufweist. In dem Standardprogramm S-Prog kann der Anwender seine eigenen Anweisungen programmieren. Das Rechnersystem 1 weist eine Schnittstellenkarte eNIC auf. Diese Schnittstellenkarte e-NIC ist als eine externe Schnittstellenkarte, also als eine unabhängige Hardware in das Rechnersystem 1 eingebaut. Diese externe Schnittstellenkarte eNIC hat einen eigenen Uhrzeitgenerator TPD zum Bereitstellen einer Sicherheitszeit FT.

In dem Prozessor 5 wird die Systemzeit SZ und die Sicherheitszeit FT mit einem Zyklus Z zum Ablauf der Steuerungs-Software Soft-PLC mit dem Sicherheitsprogramm F-Prog genutzt und ausgewertet.

Demnach ist die Steuerungs-Software Soft-PLC in dem Speicherbereich 2 abgespeichert und wird zur fehlersicheren Steuerung von Automatisierungs-Abläufen eines Prozesses in dem Prozessor 5 zyklisch Z zum Ablauf gebracht. In dem Speicherbereich 2 ist ebenfalls eine zu der Steuerungs-Software Soft-PLC zugehörige eindeutige Konfigurationsdatei PSC bezüglich einer Verbindungskonfigurations-Datei VCD abgespeichert. Die Konfigurationsdatei PSC weist die Verbindungskonfigurations-Datei VCD auf. In der Verbindungskonfigurations-Datei VCD sind alle sicheren Verbindungswege S7V zur Kommunikation des Sicherheitsprogramms F-Prog bzw. zur Kommunikation der Steuerungs-Software Soft-PLC mit anderen Automatisierungsgeräten A1, A2, A3, A4 abgelegt.

Das Sicherheitsprogramm F-Prog wird üblicherweise auf einem Engineering System erstellt bzw. projektiert. In dem Zusammenhang wird die eindeutige Konfigurationsdatei PSC, welche eben zu diesem Sicherheitsprogramm F-Prog gehört, ebenfalls konfiguriert. Zu den vorhandenen Automatisierungsgeräten A1, A2, A3, A4 werden sichere Verbindungswege S7V in dem Engineering Tool vorab projektiert. Über die externe Netzwerkkarte eNIC wird also ein erster sicherer Verbindungsweg S7V1 zu einem ersten Automatisierungsgerät A1, ein zweiter sicherer Verbindungsweg S7V2 zu einem zweiten Automatisierungsgerät A2, ein dritter sicherer Verbindungsweg S7V3 zu einem dritten Automatisierungsgerät A3 und ein vierter sicherer Verbindungsweg S7V4 zu einem vierten Automatisierungsgerät A4 genutzt.

In dem Engineering System oder Engineering Tool werden sicherheitsrelevante Projektdaten generiert und in der Konfigurationsdatei PSC hinterlegt. Mit der Projektierung werden auch die Hardwareeinstellungen der externen Netzwerkkarte eNIC durchgeführt. In der Firmware FW der Steuerungs-Software Soft-PLC kann die Konfigurationsdatei PSC hinsichtlich der Verbindungskonfigurations-Datei VCD die sicheren Verbindungswege S7V zur Kommunikation des Sicherheitsprogramms F-Prog abfragen und es kann die zuvor in dem Engineering Tool konfigurierte physikalische PROFINET Schnittstelle mit der Schnittstelle, wie sie für die sicheren Verbindungswege S7V zur Kommunikation des Sicherheitsprogramms F-Prog bzw. zur Kommunikation der Steuerungs-Software Soft-PLC mit den anderen Automatisierungsgeräten A1,...,A4 genutzt wird, vergleichen. Fällt dieser Vergleich positiv aus, so ist sichergestellt, dass sowohl die Kommunikation als auch die Ableitung der zweiten sicheren Zeitbasis, nämlich der Sicherheitszeit FT, auf der externen Netzwerkkarte eNIC mit einem unabhängigen Quarz durchgeführt wird.

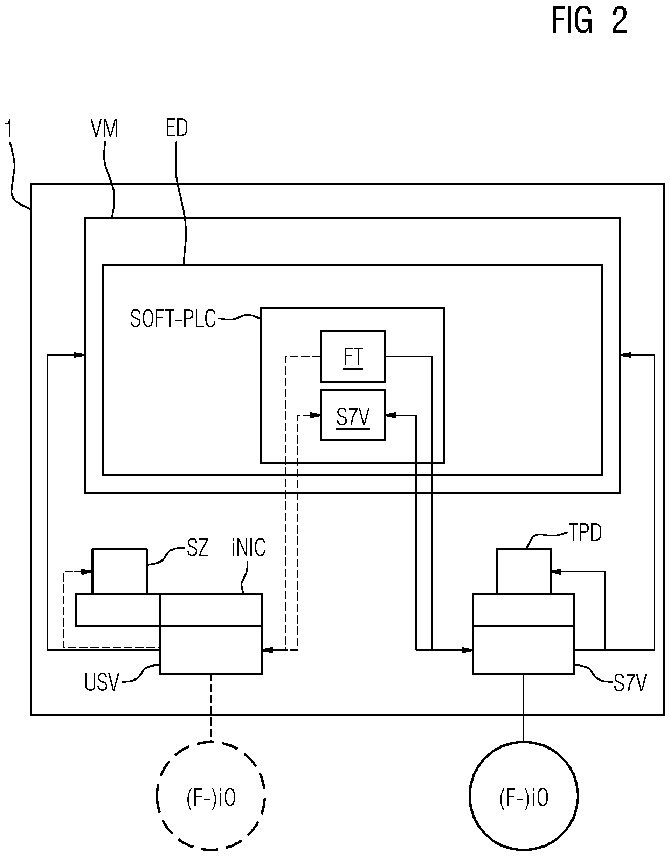

Mit der FIG 2 ist schematisch eine Gegenüberstellung von einer nicht zulässigen Zuordnung einer internen Netzwerkkarte iNIC zu einer zulässigen Zuordnung mit der externen Netzwerkkarte eNIC dargestellt.

In dem Rechnersystem 1 ist eine virtuelle Maschine VM installiert. Die virtuelle Maschine VM kann beispielsweise, als ein Linux Host, ausgestaltet sein. Innerhalb der virtuellen Maschine VM wird das Edge Device ED als eine Ablaufumgebung zum Ablauf gebracht. Die Steuerungs-Software Soft-PLC befindet sich innerhalb des Edge Devices ED. Die Zuordnung im rechten Teil mit durchgezogenen Linien ist eine zulässige Zuordnung und die Zuordnung links im Bild mit gestrichelten Linien stellt eine nicht zulässige Zuordnung der PROFINET Schnittstelle zu der Steuerungs-Software Soft-PLC dar.

Im rechten Teil ist nämlich eine hardwaremäßig unabhängige externe Schnittstellenkarte eNIC zugeordnet, mit der die Verbindungswege S7V sicher zu den externen Automatisierungsgeräten, hier im Beispiel F-IO als fehlersichere dezentrale Peripherie durchgeführt werden kann.

Im linken Teil ist beispielsweise durch einen Software-Fehler die PROFINET Schnittstelle fälschlicherweise auf eine z.B. interne Netzwerkkarte iNIC konfiguriert worden. Mit dieser Konfiguration ist aber eine F-Kommunikation nicht möglich, da die F-Ausgabegruppen nicht an dieser iNIC angeschlossen sind. Mit dieser Kenntnis geht die Steuerungs-Software Soft-PLC in einen sicheren Zustand.

Die externe Netzwerkkarte eNIC verfügt über einen eigenständigen Uhrzeitgenerator TPD (Time PCI Device) und die interne Netzwerkkarte iNIC verfügt in diesem Beispiel hingegen nur über den Uhrzeitgenerator, welcher auch die Systemzeit SZ für den Prozessor 5 bereitstellt wird.

## Patentansprüche

1. Verfahren zum Betreiben einer zyklusorientierten Steuerungs-Software (Soft-PLC) zur fehlersicheren Steuerung von Automatisierungs-Abläufen eines Prozesses, wobei die Steuerungs-Software (Soft-PLC) innerhalb eines Rechnersystems (1) zum Ablauf gebracht wird, wobei in der Steuerungs-Software (Soft-PLC) ein Sicherheitsprogramm (F-Prog) zum Ablauf gebracht wird, wobei zur Absicherung einer Systemzeit (SZ) des Rechnersystems (1) eine weitere von der Systemzeit (SZ) unabhängige Sicherheitszeit (FT) abgefragt wird,
**dadurch gekennzeichnet, dass** durch die Steuerungs-Software (Soft-PLC) eine zu dem Sicherheitsprogramm (F-Prog) gehörige eindeutige Konfigurationsdatei (PSC) bezüglich einer Verbindungkonfigurations-Datei (VCD) für sichere Verbindungswege (S7V) zur Kommunikation des Sicherheitsprogramms (F-Prog) bzw. der Steuerungs-Software (Soft-PLC) mit anderen Automatisierungsgeräten (A1,..,A4) abgefragt wird, wobei in der Verbindungkonfigurations-Datei (VCD) für sichere Verbindungswege (S7V) festgelegt ist, das die Verbindungswege (S7V) über eine externe Schnittstellenkarte (eNIC) geführt werden, und wobei die unabhängige Sicherheitszeit (FT) ebenfalls über die abgefragten sicheren Verbindungswege (S7V) von der externe Schnittstellenkarte (eNIC) abgefragt wird, dabei wird die die unabhängige Sicherheitszeit (FT) von einem Uhrzeitgenerator (TPD) der externen Schnittstellenkarte (eNIC) angefragt, wobei ein möglicher Software-/Hardwarefehler im Rechnersystems (1), durch welchen eine fälschlicherweise Abfrage der Sicherheitszeit (FT) von einer internen Schnittstellenkarte (iNIC) ausgeführt wird, dadurch aufgedeckt wird, das zyklisch geprüft wird, ob ein Abfrageweg für die unabhängige Sicherheitszeit (FT) mit den sicheren Verbindungswegen (S7V) übereinstimmt, falls das nicht der Fall ist, wird mittels der Steuerungs-Software (Soft-PLC) ein sicherer Zustand eingenommen.

2. Verfahren nach Anspruch 1, wobei das Rechnersystem (1) als eine multifunktionale Steuerungsplattform oder als ein Industrie-PC oder als eine Edge-Computing-Plattform oder als eine Cloud-Computing-Plattform betrieben wird.

3. Rechnersystem (1) umfassend eine
Laufzeit-Umgebung (FW) ausgestaltet eine zyklusorientierte Steuerungs-Software (Soft-PLC) zur Steuerung eines Prozesses ablaufen zu lassen,
einen Prozessor (5) mit einer Systemzeit (SZ),
eine Schnittstellenkarte (eNIC) mit einer externen Zeit-Quelle in Form eines Uhrzeitgenerators (TPD) zum Bereitstellen einer Sicherheitszeit (FT),
einem Speicherbereich (2), ausgestaltet zum Durchführen des Verfahrens einem der Ansprüche 1 oder 2.

4. Rechnersystem (1) nach Anspruch 3, ausgestaltet als eine multifunktionale Steuerungsplattform oder als ein Industrie-PC oder als eine Edge-Computing-Plattform oder als eine Cloud-Computing-Plattform.

5. Rechnersystem (1) nach Anspruch 3 oder 4, wobei die Steuerungs-Software (Soft-PLC) eine Sicherheitssteuerung mit einem Sicherheitsprogramm (F-Prog) und einem Standard-Anwenderprogramm (S-Prog) aufweist.
